# EUROPÄISCHE PATENTSCHRIFT

(11) **EP 1 985 474 B1**
(45) Veröffentlichungstag und Bekanntmachung des Hinweises auf die Patenterteilung: **14.11.2012**
(21) Anmeldenummer: 08155193.9
(22) Anmeldetag: 25.04.2008
(51) Int. Cl.: B60G 3/20

(54) **Sattelauflieger**
Semi-trailer
Semi-remorque

(30) Priorität: 25.04.2007 DE 102007019573
(43) Veröffentlichungstag der Anmeldung: 29.10.2008
(73) Patentinhaber: Doll Fahrzeugbau AG, 77728 Oppenau (DE)
(72) Erfinder: Gerhardt, Rolf, 77740 Bad Peterstal-Griesbach (DE); Renner, Markus, 77855 Achern-Gamshurst (DE)
(74) Vertreter: Alber, Norbert

(56) Entgegenhaltungen:
- EP-A- 0 578 326
- EP-A- 0 591 727
- EP-A- 1 213 162
- EP-A- 1 340 670
- EP-B- 1 597 134
- DE-A1-102004 038 487
- US-A- 3 528 678
- US-A1- 2006 000 207
- US-B1- 6 398 262

## Beschreibung

### I. Anwendungsgebiet

Die Erfindung betrifft einen Sattelauflieger mit Einzelradaufhängung, insbesondere in Modulbauweise.

### II. Technischer Hintergrund

Bei schweren Nutzfahrzeugen wie etwa Sattelaufliegern stand bisher weniger der Fahrkomfort und die Fahrstabilität bei hohen Geschwindigkeiten, insbesondere hohen Kurvengeschwindigkeiten, im Vordergrund, als vielmehr eine stabile, einfache und dauerfeste Konstruktion.

Deshalb wurden bisher die Räder bei derartigen Sattelaufliegern in der Regel an den in Querrichtung durchgehenden Starrachsen befestigt, die ihrerseits gegenüber dem Rahmen gefedert waren, auch wenn es sich um Achsen mit lenkbaren Rädern handelte.

Der Nachteil dieser Konstruktion ist dabei das Erfordernis des unter dem Hauptrahmen quer durchgehenden Achskörpers, der dadurch die Unterkante des Hauptrahmens in der Höhe festlegt und damit entweder die Höhe des Hauptrahmens begrenzt oder die Ladehöhe negativ begrenzt oder beide.

Dem hat man versucht mit nach unten in der Mitte gekröpften, starren Achskörpern entgegenzuwirken, was jedoch nur begrenzt möglich ist und sowohl die Herstellkosten des Achskörpers erhöht, als auch seine Stabilität senkt.

Der hohe konstruktive Aufwand und Montageaufwand von Einzelradaufhängungen wurde daher bisher nur bei Speziallösungen wie Innenladern mit voll auszunutzender Ladehöhe oder extrem geländegängigen Nutzfahrzeugen getrieben, während bei konventionellen Aufliegern dieser Aufwand als wirtschaftlich nicht vertretbar im Vergleich zu den technischen Vorteilern gesehen wurde und als zu verschleißanfällig aufgrund der vielen Lagerungsstellen empfunden wurde.

Aus dem EP 1597134 B1 ist ein Sattelauflieger mit Einzelradaufhängung bekannt. Sowohl die oberen als auch die unteren Querlenker sind dabei rahmenseitig ohne Querversatz direkt übereinander an einem vom eigentlichen Rahmen schwertförmig nach unten abragenden Rahmenteil 24 befestigt, welches in Fahrzeugrichtung verläuft.

Aus dem EP 1340670 A ist eine weitere Einzelradaufhängung bekannt, bei der die oberen und unteren Querlenker rahmenseitig ebenfalls direkt übereinander liegende Befestigungspunkte aufweisen, und im Übrigen Bestandteile eines verformbaren Parallelogramms sind.

EP 1213162 A zeigt eine Radaufhängung für Nutzfarhrzeuge mit deen Merkmanlen a-e des Ansprunchs 1.

### III. Darstellung der Erfindung

### a) Technische Aufgabe

Aufgabe der vorliegenden Erfindung war es, die technischen Vorteile in Relation zum baulichen Aufwand soweit auszubauen, dass dieses technische Vorurteil überwunden wird, damit insbesondere die bei einzeln aufgehängten Rädern zulässigen höheren Radlasten zusätzlich genutzt werden können.

Die Aufgabe der Erfindung bestand weiterhin darin, aus der Vielzahl der vorhandenen Konstruktionsarten für Einzelradaufhängungen eine für den spezifischen Anwendungsfall am besten geeignete auszuwählen bzw. zu modifizieren.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Durch das schwenkbare Befestigen der Radeinheiten - egal ob ungelenkt oder gelenkt - am Rahmen mittels eines oberen und unteren Querlenkers, die als sogenannte Dreieckslenker jeweils doppelt ausgebildet und in Längsrichtung beabstandet sind, und insbesondere den Verzicht auf Längslenker, ergibt sich eine kompakte Konstruktion, die dennoch in der Lage ist, bei entsprechender Dimensionierung alle auftretenden Kräfte in Längs- und Querrichtung in allen Einfederungszuständen und allen Lenkzuständen aufzunehmen.

Durch den Verzicht auf Längslenker wird das ansonsten vorhandene Abheben des äußeren Rades von zwillingsbereiften Radeinheiten beim Einlenken vermieden, welches zum einen das am Boden bleibende Rad überdurchschnittlich belastet und vor allem konstruktiv berücksichtigt werden muss, sodass es letztendlich die Nutzhöhe des Sattelaufliegers reduziert.

Ferner ergibt sich dadurch eine so kompakte, vor allem in Längsrichtung betrachtet wenig auskragende und einfache Konstruktion, dass derartige Achseinheiten auch mehrfach hintereinander in kurzen Abständen zu Zweiachs- oder Dreiachs-Rahmenmodulen kombiniert werden können, ohne dass hierbei aus konstruktiven Gründen zu große Längsabstände eingehalten werden müssen.

Auch die Kombination von ungelenkten und gelenkten Achsen der gleichen Bauart, also mit der gleichen Einzelradaufhängung, ist dabei problemlos möglich, wobei wie bisher üblich die vorderste Achseinheit z. B. ungelenkt und die hinteren Achseinheiten mit einem zunehmenden Lenkausschlag ausgestattet werden können bei einfacher mechanischer Kopplung der einzelnen Radeinheiten in Längsrichtung hintereinander.

Durch die Unterbringung des Feder-Dämpfer-Elementes zwischen dem vorderen und hinteren, oberen Querlenkerarm in aufrechter Stellung ist dieses Element zum einen gut geschützt untergebracht. Zum anderen ist es möglich, in Querrichtung betrachtet, die Feder-Dämpfer-Einheit senkrecht anzuordnen, wodurch bei allen Einfederungszuständen diese in Querrichtung betrachtete Senkrechtstellung erhalten bleibt und auch das Abheben des äußeren Rades bei zwillingsbereiften Radeinheiten vermieden wird.

Wenn dabei die Feder-Dämpfer-Einheit auf einem zur Fahrzeugmitte hin ragenden Fortsatz im unteren Bereich des Radaufnehmers, insbesondere des Achsschenkelträgers, aufsitzt, steht eine große vertikale Baulänge und damit ein langer Federweg für die Feder-Dämpfer-Einheit zur Verfügung, wenn dessen oberes Ende in Lageraugen etwa auf Höhe des oberen Endes des Hauptrahmens aufgenommen sind.

Um das Feder-Dämpfer-Element überhaupt im Bauraum zwischen dem vorderen und hinteren, oberen Querlenkerarm unterbringen zu können, ist das Feder-Dämpfer-Element ein Hydraulikkolben, in dem selbst keine Gasfeder mehr untergebracht ist, sondern der lediglich über eine Leitung auf einer Seite des Hydraulikkolbens mit einer Gasfeder außerhalb der Feder-Dämpfer-Einheit in Verbindung steht.

Nur dadurch wird die Feder-Dämpfer-Einheit in ihrem Querschnitt schmal genug, um trotz der hohen Radlasten in der Aufsicht betrachtet zwischen dem vorderen und hinteren Querlenker Platz zu finden.

Da der nach innen ragende Fortsatz des Radaufnehmers sich auf oder knapp oberhalb des radseitigen Anlenkpunktes für den unteren Querlenker befindet, muss das Feder-Dämpfer-Element auch dort, also bei den unteren Querlenkerarmen, dazwischen passen.

Der Vorteil einer externen Gasfeder besteht weiterhin darin, dass mehrere Feder-Dämpfer-Elemente, vorzugsweise alle Feder-Dämpfer-Elemente einer Seite des Aufliegers, auf der Federungsseite miteinander gekoppelt sind und alle gemeinsam mit mindestens einem gasgefüllten Membranspeicher, also der Gasfeder, in Verbindung stehen, welches dann gemeinsam die Federungsfunktion für alle damit gekoppelten Feder-Dämpfer-Einheiten erfüllt.

Zum einen reduziert dies den baulichen Aufwand, zum anderen kann ein solcher gasgefüllter Membranspeicher abseits der Einzelradaufhängungen am Auflieger in entsprechender Größe problemlos untergebracht werden.

Vorzugsweise sind auch die anderen, nicht gefederten, Seiten der Hydraulikkolben der Feder-Dämpfer-Elemente hydraulisch miteinander verbunden, sodass bei Überfahren einer z. B. Bodenwelle das aus dem einen Hydraulikkolben verdrängte Ölvolumen beim Einfedern des einen Rades in die angrenzenden Räder verteilt wird, die demgegenüber gleichbleibend in ihrer Federungslage verbleiben oder sogar weiter ausfedern.

Falls es sich bei den Radaufnehmern um gelenkte Radaufnehmer, also Achsschenkelträger mit darin geführtem, aufrechtstehendem, drehbarem Achsschenkel handelt, setzt der Lenkhebel - am besten einstückig - am Achsschenkel vorzugsweise auf Höhe der unteren Buchse des Achsschenkels an und ragt in Fahrtrichtung von dort nach hinten oder vorne und zwar vorzugsweise in die gleiche Richtung wie der Bremsflansch, auf dem der Radbremszylinder montiert ist.

Dieser steht dann vorzugsweise ebenfalls aufrecht, in der Seitenansicht betrachtet jedoch nicht senkrecht, sondern nach oben zur Radmitte hin ansteigend, und steht somit vor dem vorderen oder hinter dem hinteren, oberen Querlenkerarm.

Damit sind in der Aufsicht betrachtet der Radbremszylinder und der Lenkhebel des Achsschenkels übereinander angebracht, was eine sehr kompakte und den Lenkeinschlag wenig begrenzende Konstruktion ergibt.

Die Befestigung der Querlenker am Rahmen erfolgt bei den oberen Querlenkern in Lagerböcken, die auf der Außenseite des in der Regel kastenförmigen Hauptrahmens im oberen Bereich angeordnet sind und bei den unteren Querlenkern in Lagerböcken, die an der Unterseite des Hauptrahmens angeordnet sind und von dort nach unten ragen.

Eine besonders günstige Kinematik ergibt sich dabei, wenn in Fahrtrichtung betrachtet die Quererstreckung des unteren Querlenkers das 1,3-fache bis 1,8-fache, insbesondere das 1,4-fache bis 1,6-fache, insbesondere das 1,40-fache bis 1,45-fache der Quererstreckung des oberen Querlenkers jeweils gemessen zwischen den Lagerungsmitten, beträgt.

Gleiches gilt, wenn in Fahrtrichtung betrachtet der horizontale Innenversatz der radseitigen Lagerung des unteren Querlenkers zu der des oberen Querlenkers zwischen 0,30 und 0,35 der Quererstreckung des unteren Querlenkers (6) beträgt, insbesondere zwischen dem 0,32 und dem 0,33-fachen.

Darüber hinaus, wenn der vertikale Abstand des oberen und unteren Querlenkers, insbesondere gemessen an deren rahmenseitigen Aufnahmepunkten, zwischen den 0,9-fachen und 1,2-fachen der Länge des unteren Querlenkers in Querrichtung beträgt.

Die Querlenkerarme sind rahmenseitig und/oder radseitig vorzugsweise über Gummi-Metall-Lager in ihre jeweiligen Aufnahmen um horizontal in Längsrichtung verlaufende Schwenkachsen schwenkbar gelagert.

Dies dient zum einen der Schwingungsdämpfung durch den Gummianteil dieser Buchsen, zum anderen jedoch auch den verbesserten Möglichkeiten, das Eindringen von Schmutz in diese Gleitlager zu verhindern und darüber hinaus den Reibverschleiß:
Letzteres wird dadurch erreicht, dass die Gummi-Metall-Lagerbuchsen innen eine Metallbuchse und außen eine Gummibuchse oder auch umgekehrt besitzen und dabei das radiale Spiel zwischen der Metallbuchse und dem daran anliegenden, von der Gummibuchse abgewandten, Bauteil so gering ist, dass bei einem Verschwenken des Lenkerarmes um seine Schwenkachse als erstes eine Relativverdrehung zwischen der Gummibuchse und der Metallbuchse und nicht zwischen
der Metallbuchse und dem daran anliegenden anderen Bauteil, etwa einem Lagerbock oder dem Lagerungsbolzen, erfolgt.

Auch diese Relativverdrehung erfolgt erst ab einem bestimmten, definierten Verdrehwinkel, da bei geringerem Verdrehwinkel durch eine elastische Verformung der Gummibuchse die Verdrehung aufgenommen wird.

Das Eindringen von Schmutz wird dadurch vermieden, dass sowohl die Gummibuchse als auch die Metallbuchse jeweils einen radial nach außen ragenden Flanschteil aufweisen.

Wird jede Lagerung dadurch realisiert, dass zwei solcher Gummi-Metall-Flanschbuchsen axial gegeneinander gesteckt werden mit voneinander wegweisenden Flanschteilen und mittels des durchgesteckten Lagerungsbolzens die Flanschteile gegeneinander axial vorgespannt werden, so pressen die Flanschteile gegen die Stirnfläche des Lagerbockes oder Lenkerauges, wodurch dort das Eindringen von Schmutz verhindert wird.

Im Innenumfang ist das Eindringen von Schmutz durch das geringe bzw. fehlende Spiel zwischen der inneren Metallbuchse und dem Lagerbolzen ebenfalls minimiert.

Dieser Effekt kann noch verstärkt werden, indem zwischen dem Flanschteil der Metallbuchse und dem Flanschteil der Gummibuchse ein weiteres Zweischicht-Flanschteil mit Metallschicht und Gummischicht vorhanden ist, welches den axialen Vorspanneffekt verstärkt, indem es höhere axiale Vorspannungen zulässt.

Abgesehen von dem Vorteil, mittels Einzelradaufhängung höhere Radlasten und somit Achslasten zu erzielen und damit die gleiche Nutzlast mit z. B. einer geringeren Achsanzahl bewältigen zu können, kann dadurch, dass lediglich die unteren Querlenker unter den Hauptrahmen greifen, der kastenförmige Hauptrahmen in der Höhe um 20%, häufig sogar 30% höher gestaltet werden, als bei Aufliegern mit Starrachsen bei gleicher Nutzhöhe des Aufliegers.

Dadurch können die Seitenwangen des Hauptrahmens für die gleiche Verwindungssteifigkeit des Hauptrahmens dünner und damit gewichtssparender ausgeführt werden, oder es ergibt sich bei gleicher Materialstärke eine wesentlich höhere Verwindungssteifigkeit des Hauptrahmens.

Die Gewichtseinsparung beim Hauptrahmen durch verringerte Seitenwangen kommt wiederum der Nutzlast zugute.

Gleiches kann auch durch Ausbildung der Querlenker aus Aluminium oder faserverstärktem Kunststoff erreicht werden, statt als massive Schweiß- oder Schmiedteile aus Stahl.

Diejenigen Teile des Hauptrahmens, an denen Radeinheiten mittels Einzelradaufhängung aufgenommen werden - die sogenannten Hauptrahmenachsmodule - können in Längsrichtung gegeneinander oder mit dem keine Radeinheiten tragenden Mittelteil des Hauptrahmens durch Verschrauben befestigt werden, sodass vollständig, einschließlich des Lackierens, vorgefertigte Hauptrahmenmodule hergestellt und montiert werden können, ohne anschließend nachbearbeiten oder lackieren zu müssen.

Ein solches Hauptrahmenachsmodul kann eine, vorzugsweise jedoch zwei oder drei Achsen umfassen. Bevorzugt gibt es Hauptrahmenachsmodule mit zwei Achsen, also vier einzeln aufgehängten Radeinheiten und drei Achsen, also sechs einzeln aufgehängten Radeinheiten.

Auf diese Art und Weise kann ein Bausatz für das Erstellen von Sattelaufliegern geschaffen werden, der ein solches Zweiachsmodul und ein Dreiachsmodul umfasst und darüber hinaus ein oder mehrere verschiedene Hauptrahmen-Heckmodule sowie mittlere Hauptrahmenmodule.

Mit den entsprechenden Verschraubungsöffnungen an diesen Modulen und den zusätzlich notwendigen Schutzblechen für die einzelnen Radeinheiten sowie gegebenenfalls Plattformergänzungen zum Verschrauben seitlich am Hauptrahmenachsmodul oder am mittleren Rahmenmodul, kann aus diesen Teilen jeder gewünschte Sattelauflieger zusammenkombiniert werden, sei es als Zweiachser, als Dreiachser oder auch als Fünfachser.

Wenn dabei auf einen der Vorteile, nämlich die durch Einzelradaufhängung vergrößerte Bauhöhe des Hauptrahmens, verzichtet wird, kann ein solcher Bausatz sogar am gleichen Hauptrahmenachsmodul wahlweise einzeln aufgehängte Radeinheiten oder über Starrachsen aufgehängte Radeinheiten aufweisen, sofern der Bausatz einerseits Starrachsen mit Federung und andererseits Einzelradaufhängungen mit Einzelradfederung umfasst und die entsprechenden Aufnahmen am entsprechenden Hauptrahmenmodul, sowie natürlich die daran zu befestigenden Radeinheiten.

Im Normalfall jedoch werden aus den Teilen ein und desselben Bausatzes nur einzelradaufgehängte Achseinheiten zusammengestellt, jedoch kann dabei dennoch der Bausatz sowohl ungelenkte Radaufnehmer als auch gelenkte Radaufnehmer, bestehend aus Achsschenkelträger und darin schwenkbarem Achsschenkel, umfassen, sowie Einzelradaufhängungen mit Einzelradfederung, die sowohl an diesen ungelenkten als auch den gelenkten Radaufnehmer passen.

Dadurch können die gleichen Räder, also jeweils inklusive Radlager und Bremse - gegebenenfalls in einfach oder zwillingsbereifter Ausführung - und ebenso die gleichen Einzelradaufhängungen mit Federung sowohl für ungelenkte als auch für gelenkte Radeinheiten verwendet werden.

### c) Ausführungsbeispiele

Ausführungsformen gemäß der Erfindung sind im Folgenden beispielhaft näher beschrieben. Es zeigt:
- Fig. 1:: eine Bilddarstellung einer bekannten lenkbaren Hinterachse,
- Fig. 2:: die erfindungsgemäße Einzelradaufhängung,
- Fig. 3:: Ansichten der Einzelradaufhängung der Figur 2 aus den drei Raumrichtungen,
- Fig. 4:: eine entsprechende Achseinheit im ein- und ausgefederten Zustand,
- Fig. 5:: ein Zweiachsmodul in verschiedenen Längszuständen,
- Fig. 6:: ein Zweiachs-Heckteil eines Aufliegers in verschiedenen Ansichten, und
- Fig. 7:: ein Längsschnitt durch eine Lagerung eines Querlenkerarmes.

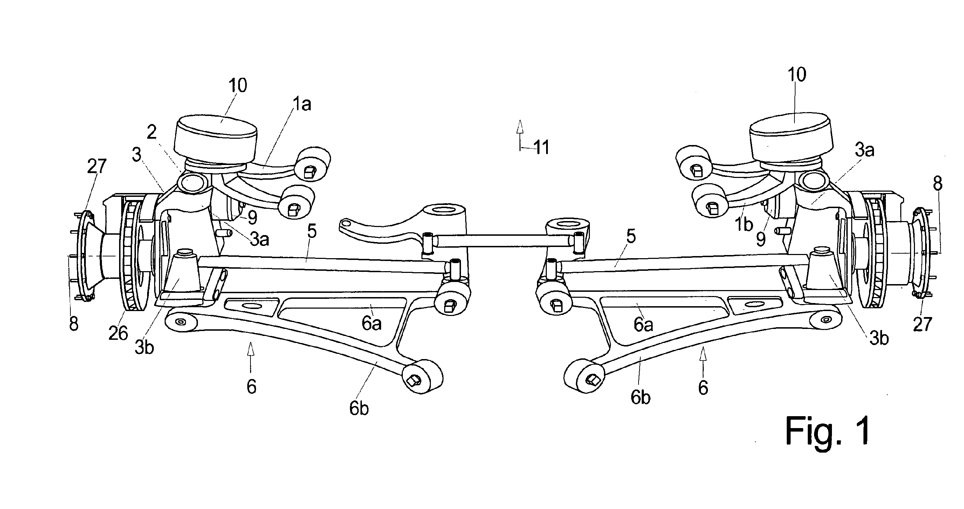

Figur 1 zeigt eine lenkbare, bekannte Einzelradaufhängung aus dem Stand der Technik ohne Rahmen und Räder:
Die das Rad tragende Nabe sowie die damit mitdrehende Bremsscheibe 26 sind drehbar in dem in Fahrtrichtung 11 von hinten betrachteten, C-förmigen, Achsschenkelträger 3 gelagert, in dessen oberen und unteren Enden im Wesentlichen vertikal verlaufende obere und untere Buchsen 3a, b ausgebildet sind zur Aufnahme des Achsschenkels 2, der in diesem Fall in eine obere und untere Hälfte zweigeteilt ist.

An jedem Teil des Achsschenkels 2 ist oberhalb des oberen sowie unterhalb des unteren Endes des Achsschenkelträgers 3 das radseitige Ende eines oberen bzw. unteren Querlenkers befestigt, und zwar schwenkbar um eine horizontale, in Fahrtrichtung 11 liegende Schwenkachse.

Jeder dieser Querlenker umfasst einen vorderen und hinteren Querlenkerarm 1a, b bzw. 6a, b, von denen die unteren Querlenkerarme 6a, b zu einem einheitlichen Teil über Querverstrebungen verbunden sind, während die oberen Querlenkerarme 1a, b lediglich in ihrer radseitigen Lagerbuchse fest miteinander verbunden sind.

Vor dem Achsschenkel 2 greifen an den Achsschenkelträgern 3 jeweils die in Querrichtung verlaufenden und miteinander gekoppelten Spurstangen 5 an, die die Auslenkung der Räder synchron zueinander bewirken.

Gefedert werden diese Radeinheiten 36 über Feder-Dämpfer-Elemente, die aufrechtstehend auf dem oberen Ende des Achsschenkelträgers 3 aufsitzen, genauer gesagt auf dem Lagerbock für die oberen Querlenker.

Da diese Radeinheiten 36 unter dem Rahmen 20 befestigt werden, steht hierfür zum einen nur wenig Federweg zur Verfügung. Des Weiteren erfolgt die Einleitung der Federungskräfte über die oberen Querlenkerarme, nämlich deren radseitige Lagerbuchse, in den Achsschenkelträger 3, was diese radseitige Lagerung des oberen Querlenkers 1 a,b zusätzlich belastet.

Der Radbremszylinder 9 ist dort auf der Vorderseite des Achsschenkelträgers 3 horizontal liegend und von der Bremsscheibe 26 aus nach innen weisend angeordnet, was jedoch bedeutet, dass bei Lenkeinschlag der Radbremszylinder 9 zwischen oberen und unteren Querlenker 1 und 6 gerät und somit die Bewegungswege dieser Querlenker 1, 6 beim Einfedern nicht mit dem dazwischen befindlichen Radbremszylinder kollidieren dürfen.

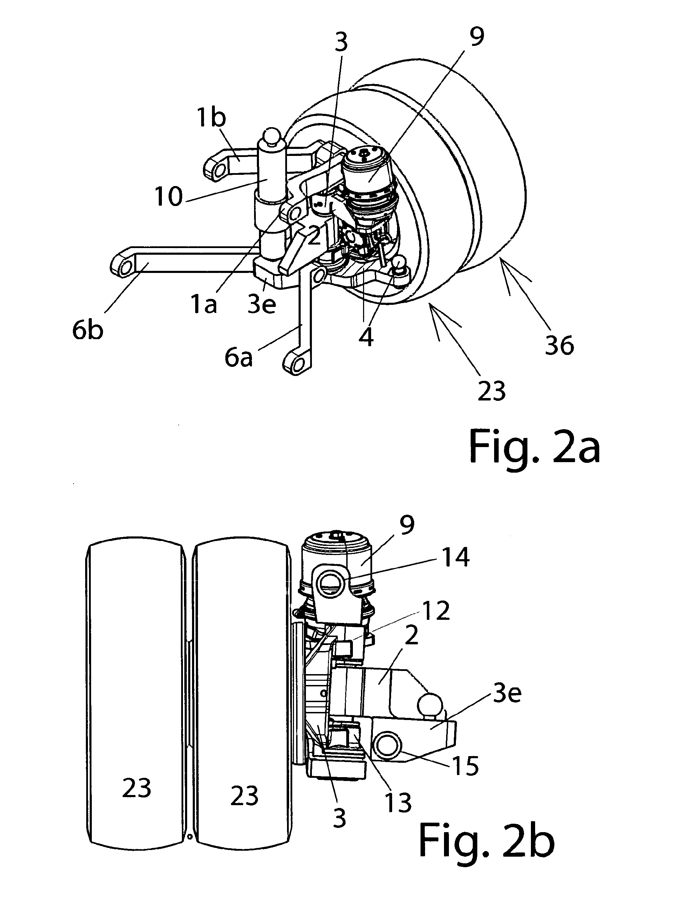

Figur 2 zeigt dagegen die erfindungsgemäße Einzelradaufhängung und zwar in Figur 2a in einer perspektivischen Ansicht mit montiertem zwillingsbereiften Rad 23 und in Figur 2b auszugsweise lediglich den Achsschenkelträger 3 mit darin eingesetztem Achsschenkel 2, die bei einer nicht lenkbaren Radeinheit auch durch einen einstückigen, starren Radaufnehmer ersetzt sein können, der die gleichen Aufnahmepunkte für die Querlenker aufweist und auf der Radseite identisch mit dem Achsschenkelträger ausgebildet ist.

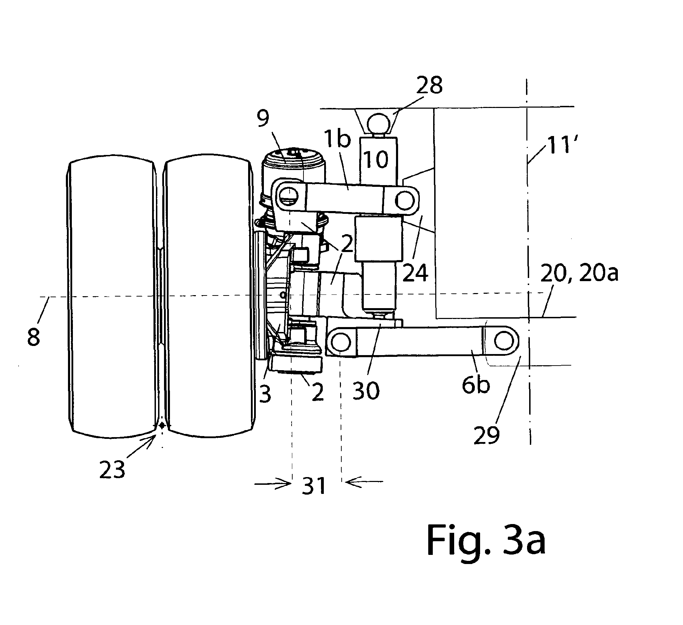

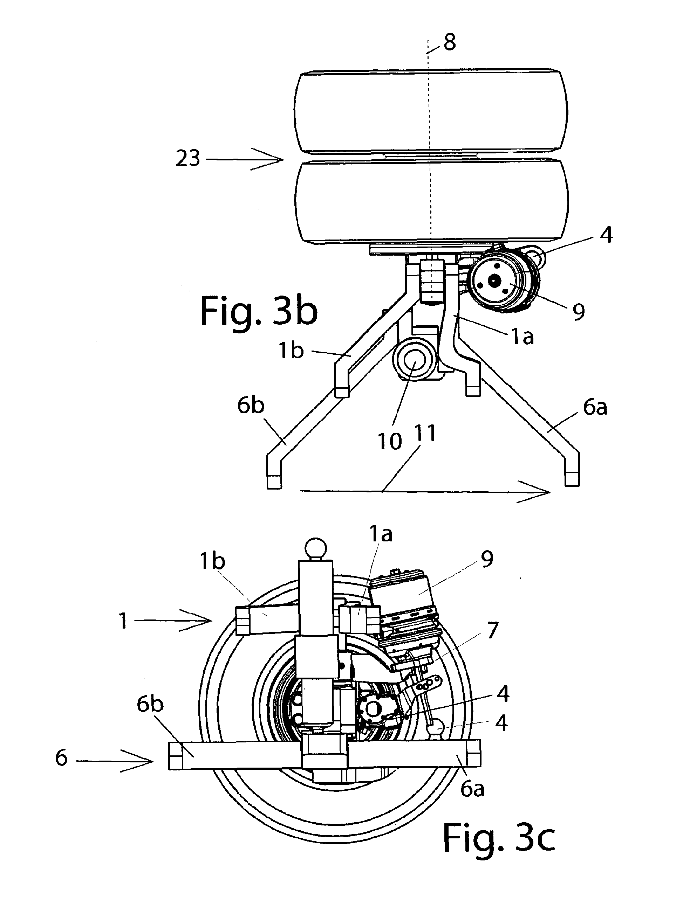

Die Einzelteile der Einzelradaufhängung sind am besten in den dargestellten Ansichten in Fahrtrichtung gemäß Figur 3a, in der Aufsicht gemäß Figur 3b und in Querrichtung zur Fahrtrichtung gemäß Figur 3c zu erkennen, die sich von der Lösung gemäß Figur 1 in einer ganzen Reihe von Punkten unterscheidet:
Bei dieser lenkbaren Radeinheit 36 - wie sie in den Figuren 2 und 3 dargestellt ist - sitzt die Feder-Dämpfer-Einheit 10, die mit ihrem oberen Ende 9a im Chassis befestigt ist, mit dem unteren Ende auf einem Achsstummel 3e auf, der einstückig vom Achsschenkelträger 3 aus etwa horizontal nach innen, also Richtung Fahrzeugmitte 11', verläuft und zwar etwa auf Höhe der unteren Buchse 3b des Achsschenkels 2 oder nur geringfügig darüber.

Dadurch entsteht ein großer Abstand zwischen unteren und oberen Befestigungspunkt der Feder-Dämpfer-Einheit und damit der gewünschte lange Federweg.

Dabei ist diese Feder-Dämpfer-Einheit 10 in der Aufsicht betrachtet - siehe Figur 3b - jeweils zwischen dem vorderen und hinteren oberen Querlenkerarm 1a, b angeordnet und ragt mit ihrem unteren Aufnahmepunkt noch in den Bereich zwischen die unteren Querlenkerarme 6a, b hinein und sitzt dennoch sehr nahe am Achsschenkel 2, also der vertikalen Schwenkachse des Rades 23, beim Einlenken.

Dies ist nur erzielbar durch eine schlanke Bauform der Feder-Dämpfer-Einheit 10, wie sie als Luftbalg nicht erreichbar ist, sondern nur durch die hier gewählte Bauform als Hydraulikkolben.

Ferner fällt auf, dass der Radbremszylinder 9 in - der Aufsicht betrachtet - außerhalb der Querlenker, in diesem Fall vor den Querlenkern, angeordnet ist und annähernd senkrecht steht und mit seinem unteren Ende auf einem vom Achsschenkelträger 3 nach vorne ragenden Bremsflansch 7 aufsitzt und deshalb beim Einlenken des Rades 23 - hier eines zwillingsbereiften Rades 23 - mit einlenkt.

Aus diesem Grund ist der vordere obere Querlenkerarm 1a, in dessen Höhenbereich sich der aufrecht stehende Bremszylinder 9 befindet, in der Aufsicht betrachtet nach hinten gekröpft, um auf seiner Vorderseite beim Einlenken des Rades 23 Raum für den Radbremszylinder 9 zu lassen.

Diese Bauform verhindert jedoch auf der anderen Seite, dass der Radbremszylinder 9 bei irgendeinem Lenkzustand in den Höhenbereich zwischen oberem und unterem Querlenker 1, 6, gerät und dort die Bewegungswege beim Einfedern minimiert.

Der durch den Radbremszylinder 9 in der Aufsicht betrachtete Bauraum wird zusätzlich im Höhenbereich unterhalb des Radbremszylinders 9 dazu benutzt, um dort den ebenfalls mit dem Achsschenkel 2 verbundenen Lenkhebel 4 anzuordnen, an dem die in den Figuren 2 und 3 noch nicht sichtbaren Spurstangen 5 in Querrichtung angreifen zum Bewirken der Auslenkung des Rades.

Vorzugsweise sind Lenkhebel 4, Bremsflansch 7 und der Rest des Achsschenkels 2 einstückig als Schweiß- oder Schmiedeteil ausgeführt.

Hinsichtlich der Feder-Dämpfer-Einheit 10 ist ein wesentliches Merkmal, dass in der Querrichtung der Figur 3c betrachtet die Feder-Dämpfer-Einheit 10 genau senkrecht steht, was gewährleistet, dass dies auch bei jedem Lenkeinschlag und Federungszustand erhalten bleibt.

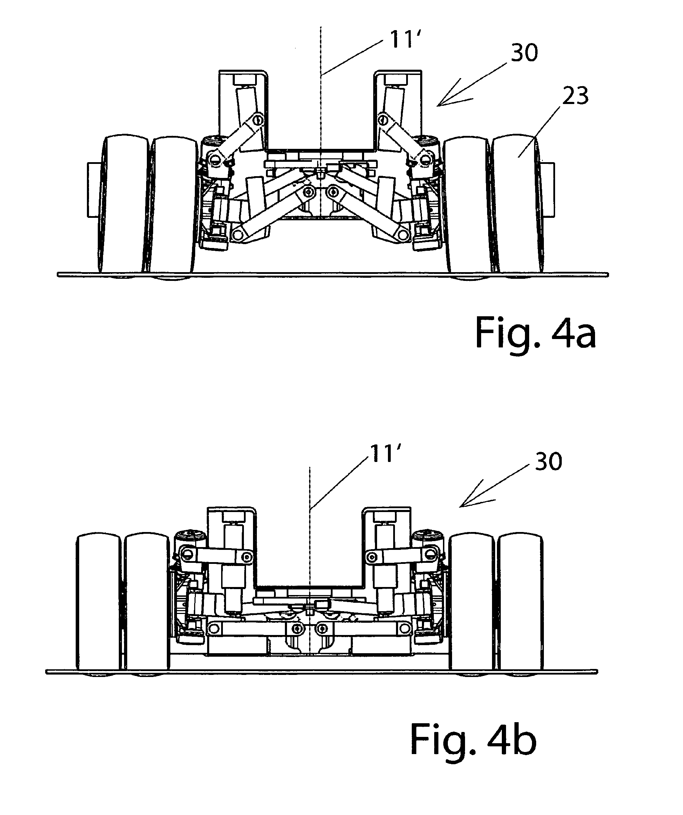

In Fahrtrichtung 11 der Figur 3a betrachtet, die den eingefederten Zustand darstellt, ist die Feder-Dämpfer-Einheit 10 mit ihrem oberen Ende sogar leicht nach innen, also zur Fahrzeug-Längsmittelebene 11' hin, geneigt, im ausgefederten Zustand dagegen - wie in Figur 4a ersichtlich - mit dem oberen Ende nach außen geneigt.

Ein weiterer Unterschied besteht darin, dass die Querlenkerarme 1a, b sowie 6a, b jeweils Einzelteile sind und somit separat mit kleineren Formen und kostengünstig hergestellt und einzeln ausgetauscht werden können und dennoch insbesondere aufgrund ihrer spezifischen Lagerung sowohl radseitig als auch rahmenseitig eine ausreichende Lagerungsgenauigkeit und Stabilität bieten.

Der hintere und obere Querlenkerarm 1 b und der vordere untere Querlenkerarm 6a sowie der hintere Querlenkerarm 6b sind dabei S-förmig gekröpft mit einem geraden Mittelteil und in gegenläufige Richtungen gekröpften Lageraugen.

Der obere vordere Querlenkerarm 1a ist dagegen in der Aufsicht betrachtet - wie zuvor beschrieben - zusätzlich im mittleren Bereich bogenförmig gekrümmt, um Platz für den Radbremszylinder 9 zu schaffen.

Wie die Ansicht der Figur 3a in Fahrtrichtung 11 zeigt - und für eine gesamte Achseinheit 30 auch die Figuren 4a im ausgefederten und eingefederten, also unbeladenen und beladenen Zustand - sind die Feder-Dämpfer-Einheit 10 sowie die oberen und unteren Querlenker 1 und 6 rahmenseitig an einem im Querschnitt hutförmigen, dann in der Mitte oben offenen, Hauptrahmen 20 oder meist - wie in Figur 3a dargestellt - kastenförmig geschlossenen Rahmen 20 befestigt, der am oberen Ende seitliche Ausleger aufweist.

Dabei sind die unteren Querlenker 6 - und zwar die Querlenker6 beider Seiten - in einem gemeinsamen Abstandsblock 29 schwenkbar gelagert, der an der Unterseite des Hauptrahmens 20 aus befestigt, insbesondere verschweißt, ist und sich nach unten erstreckt.

Die oberen Querlenker sind dagegen in einem Lagerbock 24 gelagert, der an den vertikalen Seitenflächen außen am Hauptrahmen 20 angeschweißt ist.

Die Feder-Dämpfer-Einheit 10 dagegen ist in einer Federungs-Aufnahme 28 aufgenommen, die an der Unterseite des Querauslegers des Hauptrahmens 20 befestigt, insbesondere verschweißt, ist.

In den in Fahrtrichtung 11 betrachteten Ansichten der Figuren 4a und b ist ersichtlich, dass bei einer fast vollständig eingefederten Achseinheit 30 zur Fahrzeuglängsmittelebene 11' hin die unteren Querlenker 6 annähernd horizontal stehen und die oberen Querlenker zur Mitte hin leicht abfallen, während im unbelasteten, also ausgefederten, Zustand der Figur 4a sowohl die oberen als auch die unteren Querlenker zur Fahrzeugmitte 11' hin deutlich ansteigen und dann auch die Räder 23 einen deutlich positiven Sturz aufweisen.

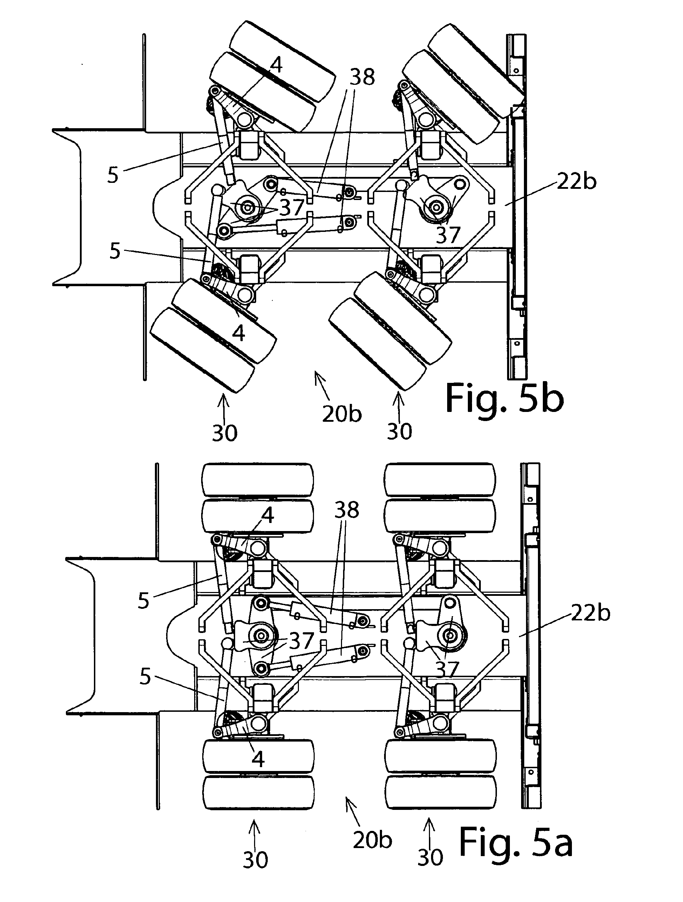

Die Figuren 5 zeigen in der Ansicht von unten den Zustand bei Geradeausfahrt in Figur 5a und bei maximalem Lenkeinschlag in Figur 5b an einem HauptrahmenHeckmodul 20b mit zwei Achseinheiten 30.

Dabei sind die in den Figuren 2 und 3 noch nicht dargestellten Spurstangen 5 zu erkennen, von denen jeweils eine an einem Lenkhebel 4 einer Radeinheit 36 angreift und die gemeinsam von einem Schwenkhebel 37 aus betätigt werden, wobei die Schwenkhebel 37 jeder Achseinheit 30 über einen Längshebel miteinander gekoppelt sind, der außerhalb des Schwenkpunktes der Schwenkhebel 37 angreift, vorzugsweise mit einem von vorne nach hinten bei den einzelnen Achseinheiten 30 zunehmenden Abstand zum Schwenkpunkt, um einen größeren Lenkausschlag zu bewirken.

Einer der Schwenkhebel 37 ist über Lenkzylinder 38, die hydraulisch oder pneumatisch betätigt werden, angesteuert.

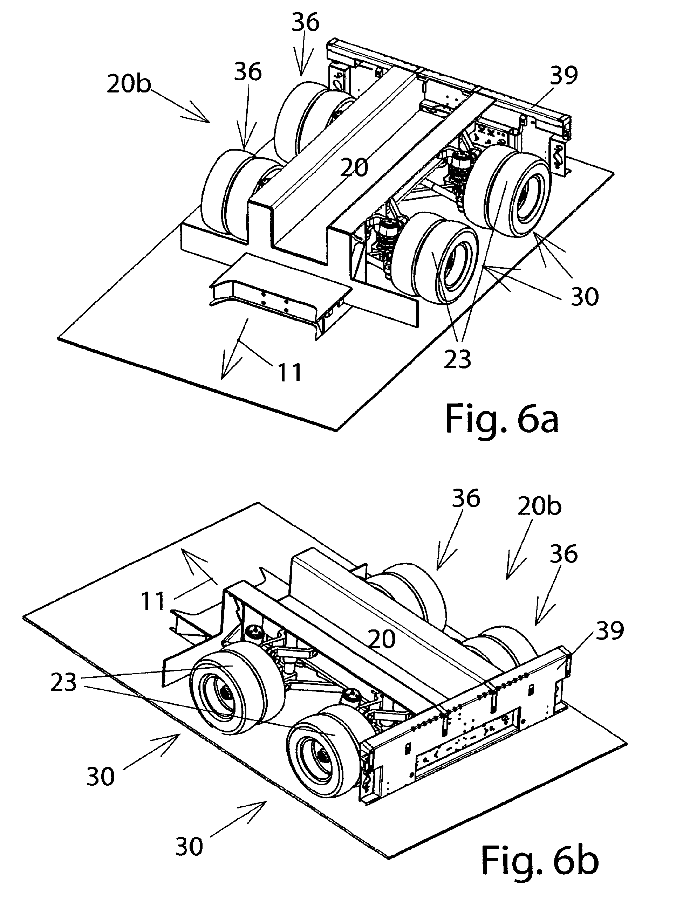

Figur 6a bis c zeigt das Heckmodul der Figuren 5 in perspektivischen Ansichten und in Figur 6c in einer Seitenansicht.

Dabei ist am vorderen Ende des Hauptrahmen-Heckmoduls 20b die Kröpfung des Rahmens 20 nach unten mit der nach vorne weisenden Ansatzplatte zum Ansetzen des mittleren Hauptrahmenmoduls zu erkennen und am hinteren Ende des Heckrahmenmoduls als Abschluss die Heckblende 39 als Aufprallschutz mit Aufnahme für das Heckkennzeichen, die Heckleuchten etc.

Sofern der Auflieger keine abgesenkte Ladefläche vor den Hinterachsen 30 aufweisen soll, ist beim Hauptrahmenachsmodul die in Figur 6c dargestellte Absenkung am vorderen Ende nach unten selbstverständlich nicht vorhanden.

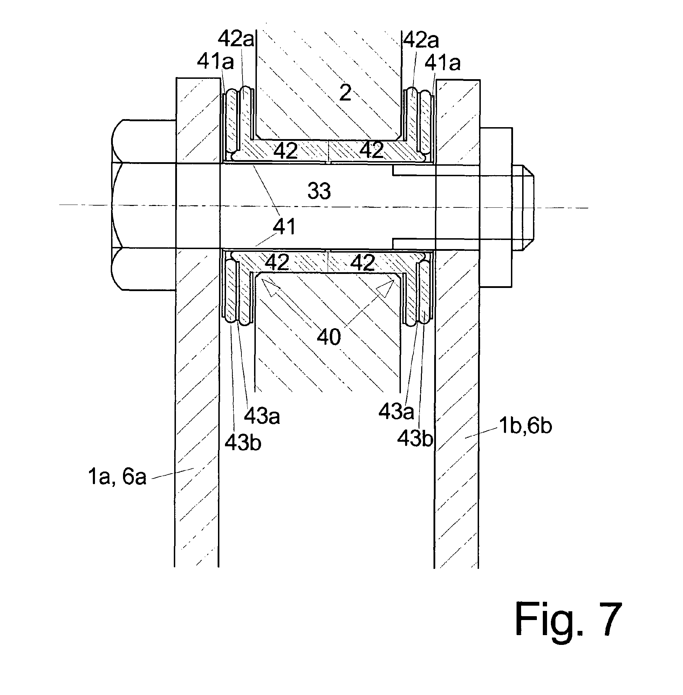

Figur 7 zeigt die schwenkbare Befestigung eines Paares von Querlenkerarmen 1a,b bzw. 6a,b z. B. am radseitigen Ende am Achsschenkel 2. Dabei ist in die Durchgangsbohrung des Achsschenkels 2 von jeder Seite eine der Flanschbuchsen 40 eingeschoben, bis diese mit ihrem Flansch an den Stirnflächen des Achsschenkels 2 um die Durchgangsbohrung herum anliegen. Die inneren Enden der Flanschbuchsen 40 berühren sich dann noch nicht ganz.

Wie üblich ist dann stirnseitig außen auf die Flanschbuchsen jeweils ein Querlenkerarm 1a bzw 1b oder 6a bzw. 6b angelegt, und der Lagerbolzen 33 ist dann durch die fluchtenden Bohrungen hindurch geschoben und axial verspannt und presst damit beidseitig die beiden Querlenker gegen die Flanschbuchsen 40 und damit den Achsschenkel 2 an.

Die Flanschbuchsen 40 sind dabei Gummi-Metall-Flanschbuchsen, mit einer innen liegenden Metallbuchse 41, die auch ein Flanschteil 41a umfasst und einer außen drum herum angeordneten Gummi-Flansch-Buchse, die ebenfalls aus einem Schaftteil und einem Flanschteil 42a besteht. Zusätzlich ist zwischen dem Flanschteil 42a der Gummibuchse 42 und dem Flanschteil 41a der Metallbuchse ein weiteres kreisringförmiges flanschartiges Zweischichtteil 43 angeordnet, welches in axialer Richtung hintereinander eine Metallschicht 43a und eine Gummischicht 43b aufweist. Zusätzlich ist auf der stirnseitigen Innenfläche des Flanschteiles 42a der Gummibuchse 42 ebenfalls ein Metallring als Anlagefläche angeordnet.

Durch das axiale Verspannen mittels des Lagerbolzens 43 werden die Flanschteile gegen die Stirnflächen des Achsschenkels 2 gepresst, so dass von dort in dieses Gleitlager kaum Schmutz eindringen kann. Diese axiale Verspannung ist durch das in axialer Richtung zusätzlich zwischen gelegte Zweischichtteil 43 besonders elastisch und unempfindlich gegen z. B. temperaturbedingte Dehnungen des Lagerbolzens 33. Weiterhin ist das Eindringen von Schmutz zwischen die Gummi-Metall-Buchsen 40 und den Lagerbolzen 33 nicht nur durch das axiale Anpressen der Querlenker 1a,b bzw. 6a,b an den äußeren Flanschflächen der Flanschbuchsen 40 verhindert, sondern zusätzlich auch dadurch, dass zwischen dem Innenumfang der Metallbuchse 41 und dem Außenumfang des Lagerbolzens 33 möglichst wenig bzw. kein Spiel vorhanden ist. Wenn eine Relativverdrehung zwischen einem der Querlenker 1 bzw. 6 und dem Achsschenkel 2 durch eine Federungsbewegung des Fahrzeuges erfolgt, wird bis zu einem bestimmten Verdrehwinkel dies durch die in Umfangsrichtung vorhandene Elastizität der Gummibuchse 42 aufgenommen und an den Kontaktflächen der einzelnen Teile findet zunächst keine Relativverschiebung statt. Über einen bestimmten Drehwinkel hinaus findet dann zunächst in Umfangsrichtung eine Relativbewegung zwischen der Gummibuchse 42 und der Metallbuchse 41 statt, nicht jedoch zwischen der Metallbuchse 41 und dem Lagerbolzen 43. Erst bei einem noch größeren Verdrehwinkel kann letzteres ggf. zusätzlich noch auftreten.

### BEZUGSZEICHENLISTE

- 1: oberer Querlenker
- 1 a: vorderer oberer Querlenkerarm
- 1 b: hinterer oberer Querlenkerarm
- 2: Achsschenkel
- 3: Achsschenkelträger
- 3a: obere Buchse
- 3b: untere Buchse
- 3e: Achsstummel
- 3f: Aufnahmefläche
- 4: Lenkhebel
- 5: Spurstange
- 6: unterer Querlenker
- 6a: vorderer unterer Querlenkerarm
- 6b: hinterer unterer Querlenkerarm
- 7: Bremsflansch
- 8: Radachse
- 9: Radbremszylinder
- 10: Feder-Dämpfer-Element
- 11: Fahrtrichtung
- 11': Längsmittelebene
- 12: obere Buchse (Achsschenkel)
- 13: untere Buchse (Achsschenkel)
- 14: radseitiges Gelenk (o Querlenker)
- 15: radseitiges Gelenk (u. Querlenker)
- 16: rahmenseitiges Gelenk (o. Querlenker)
- 17: rahmenseitiges Gelenk (u. Querlenker)
- 18: Querstreckung unterer Querlenker
- 19: Querstreckung oberer Querlenker
- 20: Hauptrahmen
- 20a: Hauptrahmenachsmodul
- 20b: Hauptrahmenheckmodul
- 21: Lagerbolzen
- 22: Rad
- 23: Lagerbock
- 26: Bremsscheibe
- 27: Nabe
- 28: Federungsaufnahme
- 29: Abstandsblock
- 30: Achseinheit
- 31: Innenversatz
- 32: vertikaler Abstand
- 33: Gelenkbolzen
- 34: Gleitlagerbuchse
- 35: Gummi-Metall-Lager
- 36: Radeinheit
- 37: Schwenkhebel
- 38: Lenkzylinder
- 39: Heckblende
- 40: Flanschbuchse
- 41: Metallbuchse
- 41a: Flanschteil
- 42: Gummibuchse
- 42a: Flanschteil
- 43: Zweischicht-Teil
- 43a: Metallschicht
- 43b: Gummischicht

## Patentansprüche

1. Sattelauflieger (25) mit wenigstens einer Aufliegerachse (24) mit Einzelradaufhängung, wobei
a) das Rad (23) an einem auf der Radinnenseite aufrecht stehenden Achsschenkelträger (3), drehbar befestigt ist,
b) der Achsschenkelträger (3) über einen oberen Querlenker (1) und einen unteren Querlenker (6) und insbesondere ohne Längslenker mit dem Hauptrahmen (20) gelenkig verbunden ist, und
c) der Achsschenkelträger (3) sich über einen Stoßdämpfer (10) und eine Feder (10) am Rahmen abstützt, wobei
d) oberer und unterer Querlenker (1, 6) je zwei in Fahrtrichtung (11) hintereinander liegende Querlenkerarme (1a,b) bzw. (6a, b) umfassen, die vom Rad (23) zur Fahrzeugmitte hin in der Aufsicht betrachtet auseinanderstreben, **dadurch gekennzeichnet, dass**
e) in Fahrtrichtung (11) betrachtet der horizontale Innenversatz (31) der radseitigen Lagerung (15) des unteren Querlenkers (6) zu der des oberen Querlenkers (1) zwischen 0,30 und 0,35 der Quererstreckung (18) des unteren Querlenkers (6) beträgt, insbesondere zwischen dem 0,32 und dem 0,33-fachen,
f) die Feder-Dämpfer-Einheit (10) aufrechtstehend zwischen dem vorderen und hinteren oberen Querlenkerarm (1a, b) angeordnet ist und mit dem unteren Ende direkt auf einem vom Achsschenkelträger (3) nach innen ragenden Achsstummel (3e) gelenkig aufsitzt, der sich auf Höhe oder knapp oberhalb des radseitigen Anlenkpunktes für den unteren Querlenker (16) am Achsschenkelträger (3) befindet, und wobei die Feder-Dämpfer-Einheit (10) zwischen die unteren Querlenkerarme (6a, 6b) passt,
g) die unteren Querlenker (6) beider Seiten rahmenseitig in einem Abstandsblock (29), der seinerseits an der Unterseite (26) des Hauptrahmens (20) befestigt ist, schwenkbar gelagert sind.

2. Sattelauflieger nach einem der vorhergehenden Ansprüche,
**dadurch gekennzeichnet, dass**
- ein Radbremszylinder (9) aufrecht stehend vor oder hinter dem oberen Querlenker (1) angeordnet ist.

3. Sattelauflieger nach einem der vorhergehenden Ansprüche,
**dadurch gekennzeichnet, dass**
- die Feder-Dämpfer-Einheit (10), betrachtet in der horizontalen Querrichtung zur Fahrtrichtung (11), immer senkrecht steht unabhängig vom Einfederungs-Zustand und Lenk-Zustand.

4. Sattelauflieger nach einem der vorhergehenden Ansprüche,
**dadurch gekennzeichnet, dass**
- der obere Querlenker (1) rahmenseitig in Lagerböcken auf der Außenseite des, insbesondere kastenförmigen Hauptrahmens (20), schwenkbar befestigt ist.

5. Sattelauflieger nach einem der vorhergehenden Ansprüche,
**dadurch gekennzeichnet, dass**
- das Feder-Dämpfer-Element (10) eine Hydraulikfeder ist mit einem Hydraulikkolben, dessen eine Seite zusätzlich mit wenigstens einem gasgefüllten Membranspeicher als Gas-Feder in Verbindung steht, die mit allen Stoßfeder-Dämpfer-Einheiten (10) einer Seite des Aufliegers verbunden ist, und
- die Feder-Dämpfer-Einheiten (10) einer Seite des Aufliegers mit jeweils zwei verschiedenen gasgefüllten Membranspeichern mit unterschiedlichem Druckniveau in Verbindung stehen für Leerfahrt und beladener Fahrt des Aufliegers.

6. Sattelauflieger nach einem der vorhergehenden Ansprüche,
**dadurch gekennzeichnet, dass**
in Fahrtrichtung (11) betrachtet die Quererstreckung (18) des unteren Querlenkers (6) das 1,3-fache bis 1,8-fache, insbesondere das 1,4-fache bis 1,6-fache, insbesondere das 1,40-fache bis 1,45-fache der Quererstreckung (19) des oberen Querlenkers (1), jeweils gemessen zwischen den Lagerungsmitten, beträgt.

7. Sattelauflieger nach einem der vorhergehenden Ansprüche,
**dadurch gekennzeichnet, dass**
- der vertikale Abstand (32) des oberen und unteren Querlenkers (1,6), insbesondere gemessen an deren rahmenseitigen Aufnahmepunkten (14, 15), zwischen den 0,9-fachen und 1,2-fachen der Länge des unteren Querlenkers (6) in Querrichtung beträgt.

8. Sattelauflieger nach einem der vorhergehenden Ansprüche,
**dadurch gekennzeichnet, dass**
- dass die Querlenker aus Aluminium oder Fasern-verstärktem Kunststoff bestehen.

9. Sattelauflieger nach einem der vorhergehenden Ansprüche,
**dadurch gekennzeichnet, dass**
bei einem Hauptrahmenachsmodul (20a) mit zwei oder mehr Achsen
- die Räder der vordersten Achseinheit ungelenkt sind,
- die Räder der nachfolgenden weiter hinten liegenden Radeinheiten zunehmend stärker ausgelenkt werden, und
- unabhängig vom Maß der Lenkbarkeit bei den gelenkten und ungelenkten Radeinheiten identische Querlenker verwendet werden.

10. Herstellungsverfahren für einen Sattelauflieger nach einem der vorhergehenden Ansprüche, mit wenigstens einer insbesondere lenkbaren Aufliegerachse unter Verwendung eines Bausatzes,
**dadurch gekennzeichnet, dass**
der Bausatz umfasst
- Radeinheiten (36) jeweils umfassend einen Achsschenkel (2), Achsschenkelträger (3), Radlager (36b), Rad (23) und Bremse,
- Starrachsen mit Federung,
- Einzelradaufhängungen mit Einzelradfederung,
- einem Hauptrahmen (20), bestehend aus einzelnen miteinander verschraubbaren Rahmen-Modulen (20a, b, c).

11. Herstellungsverfahren nach Anspruch 10,
**dadurch gekennzeichnet, dass**
der Bausatz umfasst
- ein Hauptrahmenachsmodul (20a) mit vier einzeln aufgehängten Radeinheiten (36),
- ein Hauptrahmenmodul (20a') mit sechs einzeln aufgehängten Radeinheiten (36),
- mindestens ein Hauptrahmenheckmodul (20b1, 20b2),
- mindestens ein mittleres Hauptrahmenmodul (20c1, 20c2),
- Verschraubungsöffnungen an den Heckrahmenmodulen (20b) und den mittleren Rahmenmodulen (20c), die zu den Verschraubungsöffnungen in den Stirnseiten des Hauptrahmenachsmodul (20a) passen,
- Schutzbleche (21) für die einzelnen Radeinheiten (36) oder durchgehend über mehrere hintereinander liegenden Radeinheiten (36),
- Plattformergänzungen (22) zum Verschrauben seitlich am Hauptrahmenachsmodul (20a).

12. Herstellungsverfahren nach Anspruch 10 oder 11,
**dadurch gekennzeichnet, dass**
der Bausatz ein Hauptrahmenachsmodul (20a) und ein mittleres Rahmenmodul (20c) umfasst, in denen ein in Längsrichtung verlaufender Hohlraum für einen teleskopierbaren Teil des Hauptrahmens vorhanden ist.

## Claims

1. A semi trailer (25) comprising at least one semi trailer axle (24) with independent wheel suspension, wherein
a) a wheel (23) is rotatably attached at an axle journal support (3) standing upright at an inner side of the wheel,
b) the axle journal support (3) is pivotably linked with the main frame (20) through an upper transversal suspension link (1) and a lower transversal suspension link (6) and in particular without a longitudinal suspension link, and
c) the axle journal support (3) is supported at the frame through a shock absorber (10) and a spring (10), wherein
d) the upper and the lower transversal suspension link (1, 6) respectively include two transversal suspension link arms (1a, b) or (6a, b) arranged behind one another in driving direction (11), wherein the suspension link arms extend away from one another from the wheel (23) to a center of the vehicle in top view,
e) wherein a horizontal inward offset (31) of the wheel side support (15) of the lower transversal suspension link (6) relative to the support of the upper transversal suspension link (1) is between 0.30 and 0.35 times the transversal extension (18) of the lower transversal suspension link (6), in particular between 0.32 times and 0.33 times viewed in driving direction (11),
f) wherein the spring-damper-unit (10) is vertically arranged between the forward and rear upper transversal suspension link arm (1 a, b) and is pivotably linked with its lower end directly at an axle stub (3e) protruding inward from the axle journal support (3), wherein the axle stub is level with or slightly above the wheel side link point for the lower transversal suspension link (16) at the axle journal support (3), and wherein the spring-damper-unit (10) fits between the lower transversal suspension link arms (6a, 6b), and
g) wherein the lower transversal suspension links (6) of both sides are pivotably supported at the frame in a spacer block (29) which in turn is attached at a bottom side (26) of the main frame (20).

2. The semi trailer according to one of the preceding claims, wherein a wheel brake cylinder (9) is arranged vertically standing in front or behind the upper transversal suspension link (1).

3. The semi trailer according to one of the preceding claims, wherein the spring-damper-unit (10) is always arranged vertically viewed in horizontal transversal direction relative to the driving direction (11) irrespective of the spring compression condition and the steering condition.

4. The semi trailer according to one of the preceding claims, wherein the upper transversal steering link (1) is pivotably supported at the frame in support blocks on an outside of the main frame (20) which is in particular box shaped.

5. The semi trailer according to one of the preceding claims, wherein the spring-damper-unit (10) is a hydraulic spring with a hydraulic piston whose one side is additionally connected with at least one gas filled membrane accumulator configured as a gas spring which is connected with all spring-damper-units (10) of one side of the semi trailer, and
wherein the spring-damper-units (10) of one side of the semi trailer are connected with two different respective gas-filled membrane accumulators with different pressure levels for empty driving and for loaded driving of the semi trailer.

6. The semi trailer according to one of the preceding claims, wherein a transversal extension (18) of the lower transversal suspension link (6) is 1.3 times to 1.8 times, in particular 1.4 times to 1.6 times, in particular 1.4 times to 1.45 times the amount of a transversal extension (19) of the upper transversal suspension link (1) respectively measured in driving direction (11) between support centers.

7. The semi trailer according to one of the preceding claims, wherein a vertical distance (32) of the upper and lower transversal suspension link (1, 6), in particular measured at its frame side support points (14, 15) is between 0.9 times and 1.2 times the length of the lower transversal suspension link (6) in transversal direction.

8. The semi trailer according to one of the preceding claims, wherein the transversal suspension links are made from aluminum or fiber reinforced plastic material.

9. The semi trailer according to one of the preceding claims, wherein for a main frame axle module (20a) with two or more axles
- wheels of the foremost axle unit are not steered,
- wheels of the subsequent more rearward wheel units are deflected by an increasing amount, and
- identical transversal suspension links are used irrespective of a degree of steerability of the steered and non-steered wheel units.

10. A production method for a semi trailer according to one of the preceding claims with at least one in particular steerable semi trailer axle using a kit, comprising
- wheel units (36) respectively including an axle journal (2), an axle journal support (3), a wheel bearing (36b), a wheel (23) and a brake,
- straight axles with spring suspension,
- single wheel suspensions with individual wheel spring support,
- a main frame (20) including two frame modules (20a, b, c) that can be bolted together one by one.

11. A production method according to claim 10, wherein the kit comprises
- a main frame axle module (20a) with four independently suspended wheel units (36),
- a main frame module (20a') with six independently suspended wheel units (36),
- at least one main frame tail module (20b1, 20b2),
- at least one center main frame module (20c1, 20c2),
- bolt openings at tail frame modules (20b) and center frame modules (20c), wherein the bolt openings match bolt openings in faces of the main frame axle module (20a),
- fenders (21) for particular wheel units (36) or integrally configured fenders over plural wheel units (36) arranged behind one another,
- platform supplements (22) for a bolted connection on sides of the main frame axle module (20a).

12. A production method according to claim 10 or 11, wherein the kit includes a main frame axle module (20a) and a center frame module (20c) in which a longitudinally extending cavity for a telescopable portion of the main frame is provided.

## Revendications

1. Semi-remorque (25) avec au moins un essieu de semi-remorque (24) avec au moins une suspension à roues indépendantes,
a) la roue (23) étant fixée en rotation sur un support de fusée d'essieu (3) vertical sur la face interne de la roue,
b) le support de fusée d'essieu (3) étant relié en articulation par un levier transversal supérieur (1) et un levier transversal inférieur (6) et en particulier sans levier longitudinal au châssis principal (20), et/ou
c) le support de fusée d'essieu (3) prenant appui par un amortisseur de choc (10) et un ressort (10) contre le châssis,
d) le levier transversal supérieur ou inférieur (1, 6) comprenant respectivement deux bras de levier transversaux (1 a, b) respectivement (6a, b) disposés l'un derrière l'autre dans la direction de marche (11), bras qui font saillie de la roue (23) en direction du centre de véhicule observé en vue de dessus,
**caractérisé en ce que**
e) observé dans la direction de marche (11), le décalage interne horizontal (31) du palier côté roue (15) du levier inférieur transversal (6) est compris par rapport à celui du levier transversal supérieur (1) au moins entre 0,30 et 0,35 fois de l'extension transversale (18) du levier transversal inférieur (6), en particulier entre 0,32 et 0,33 fois,
f) l'unité d'amortissement par ressort (10) est disposée verticalement entre le bras de levier transversal supérieur avant et arrière (1 a, b) et repose directement par l'extrémité inférieure sur un support d'essieu (3e) faisant saillie vers l'intérieur d'un support de fusée d'essieu (3) qui se trouve à hauteur ou juste au-dessus du point d'articulation côté roue pour le levier transversal inférieur (16) sur le support de fusée d'essieu (3), et l'unité d'amortissement par ressort (10) étant adaptée entre les bras de levier transversaux (6a, 6b),
g) les leviers transversaux inférieurs (6) sont logés de part et d'autres du châssis dans un bloc d'espacement (29) qui est fixé pour sa part sur la face inférieure (26) du cadre principal (20).

2. Semi-remorque selon l'une des revendications précédentes, **caractérisé en ce qu'**
- un vérin de freinage de roue (9) est disposé verticalement devant ou derrière le levier transversal (1).

3. Semi-remorque selon l'une des revendications précédentes, **caractérisé en ce que**
- l'unité d'amortissement par ressort (10), observée dans la direction transversale horizontale par rapport à la direction de déplacement (11) est toujours perpendiculaire indépendamment de l'état d'amortissement-ressort de guidage.

4. Semi-remorque selon l'une des revendications précédentes, **caractérisé en ce que**
- le levier transversal supérieur (1) est fixé de manière pivotante côté châssis dans des supports de palier sur la face externe du châssis principal (20) en particulier en forme de caisson.

5. Semi-remorque selon l'une des revendications précédentes, **caractérisé en ce que**
- l'unité d'amortissement par ressort (10) est un ressort hydraulique avec un piston hydraulique dont une face est reliée avec au moins un accumulateur de membrane rempli de gaz en tant que ressort à gaz, qui est relié avec toutes les unités d'amortisseur de ressort (10) d'une face du semi-remorque, et
- les unités d'amortissement de ressort (10) d'une face d'un semi-remorque sont reliées avec réciproquement deux accumulateurs hydrauliques différents remplis de gaz présentant différents niveaux de pression pour une marche à vide et une marche en charge de semi-remorque.

6. Semi-remorque selon l'une des revendications précédentes, **caractérisé en ce qu'** observé dans le sens de marche (11), l'extension transversale (18) du levier transversal inférieur (6) représente 1,3 à 1,8 fois en particulier 1,4 à 1,6 fois en particulier 1,40 à 1,45 fois l'extension transversale (19) du levier transversal supérieur (1), respectivement mesuré entre les milieux de palier.

7. Semi-remorque selon l'une des revendications précédentes, **caractérisé en ce que**
- la distance verticale (32) du levier supérieur et inférieur (1, 6), en particulier mesuré aux points de logement (14, 15) côté châssis, est comprise entre 0,9 et 1,2 fois la longueur de levier transversal inférieur (6) dans la direction transversale.

8. Semi-remorque selon l'une des revendications précédentes, **caractérisé en ce que**
- les leviers supérieurs se composent d'aluminium ou de matière plastique renforcée en fibre.

9. Semi-remorque selon l'une des revendications précédentes, **caractérisé en ce que**
- pour un module d'essieux de châssis principal (20a) avec un ou deux essieux
- les roues de l'unité d'essieux la plus en avant sont déviées,
- les roues des unités de roue suivantes se trouvant plus en arrière sont déviées plus fortement, et
- indépendamment de la mesure de la manoeuvrabilité des unités à roues orientables ou fixes, il est utilisé des leviers transversaux identiques.

10. Procédé de fabrication pour un semi-remorque selon l'une des revendications précédentes, comprenant au moins un essieu de semi-remorque en particulier orientable en utilisant un jeu de composant,
**caractérisé en ce que**
le jeu de composant comprend
- des unités de roue (36) comportant réciproquement une branche d'essieu (2), un support de branche d'essieu (3), un roulement de roue (38), une roue (23) et un frein,
- des essieux rigides avec amortisseur,
- des suspensions de roue unique avec amortisseur de roue unique,
- un châssis principal (20) se composant de modules de châssis (20a, b, c) vissables entre eux.

11. Procédé de fabrication selon la revendication 10,
**Caractérisé en ce que**
le jeu de compensant comprend
- un module d'essieu de châssis principal (20a) avec quatre unités de roue suspendues individuellement (36),
- un module d'essieu de châssis principal (20a') avec six unités de roule suspendues individuellement (36),
- au moins un module arrière de châssis principal (20b1, 20b2),
- au moins un module médian de châssis principal (20c1, 20c2),
- des orifices filetés sur les modules d'essieux de châssis principaux et sur les modules de châssis médians (20c), qui correspondent dans les faces avant du module d'essieu de châssis principal (20a) aux orifices filetés,
- des tôles de protection (21) pour chacune des unités de roue (36) ou continu sur plusieurs unités de roue (36) situées l'une après l'autre,
- des compléments de plateforme (22) pour le vissage latéral sur le module d'essieu de châssis principal (20a).

12. Procédé de fabrication selon la revendication 10 ou 11, **caractérisé en ce que** le jeu de composants comprend un module d'essieu de châssis principal (20a) et un module de châssis médian (20c) dans lesquels un espace creux s'étendant dans le sens longitudinal est prévu pour une partie télescopique du châssis principal.
